# EUROPEAN PATENT SPECIFICATION

(11) **EP 0 625 303 B1**
(45) Date of publication and mention of the grant of the patent: **12.08.1998**
(21) Application number: 94303657.4
(22) Date of filing: 23.05.1994
(51) Int. Cl.: A01G 17/12

(54) **A tie**
Ein Band
Une bande

(30) Priority: 21.05.1993 GB 9310529
(43) Date of publication of application: 23.11.1994
(73) Proprietor: BOWTHORPE PLC, Crawley, West Sussex RH10 2RZ (GB)
(72) Inventor: Heaton, Thomas, Manchester M31 4PT (GB)
(74) Representative: Gibson, Stewart Harry

(56) References cited:
- DE-U- 1 852 268
- DE-U- 1 865 731
- GB-A- 2 209 111

## Description

This invention relates to a tie, and more particularly but not solely to a tie for tying a tree to a post.

It is known to support young trees and other plants by tying them to posts so as to keep them upright and prevent them from breaking during adverse weather conditions. The plants may be tied to the posts using twine or plant ties. One such plant tie comprises an elongate plastics strap having a buckle at one end. In use, the strap is looped around the tree and post and its ends fastened together. If the strap is tied too tight, the plant will be strangled and prevented from growing. However, if the strap is tied too loosely, the plant can move and may become damaged by rubbing against the post.

DE-U-1-852-268 discloses a tie which alleviates some of the above-mentioned problems comprising an elongate strap formable into first and second side-by-side loops, and fastening means arranged for locking the loops, the arrangement enabling the second loop to be tightened to a tension independent of the tension to which the first loop is tightened.

In use as a plant tie, the first loop is formed around a supporting post to be supported and the second loop is formed around a plant to be supported. The loop formed around the plant can be tightened to a higher tension than the loop formed around the post. Thus the plant can be held securely to the post without being strangled.

In accordance with this invention, there is provided a tie of the above-mentioned type which is characterised in that said fastening means is arranged for locking the loops independently of each other, the arrangement further enabling the first loop to be tightened to a tension independent of the tension to which the second loop is tightened.

Preferably the tie comprises a body portion from which the strap or straps extend, and arranged for positioning between the plant and post (or other two members about which, in use, the two loops are formed). The body portion therefore serves to space the plant and post apart to prevent the plant from rubbing against the post.

Preferably at least the strap to be looped around the plant is formed with a series of perforations along its length, to enhance it ability to stretch: the plant is therefore able to grow without being strangled by the loop of the strap which is tied around it.

The tie may comprise first and second straps which both extend from a first end of the body portion and which are each formed with a series of perforations along their lengths, and the body portion being formed with a pair of through-passages, between its opposite ends, arranged so that each strap can be formed into a loop and then passed through a respective passage, from the opposite end to the first end: the fastening means comprises projections on the body portion, arranged to engage with selective perforations of the two straps. Preferably the two straps are identical to each other. Preferably the fastening means comprises two projections in the form of hook-shaped catches on the first end of the body portion, for engaging the respective straps.

Preferably the tie comprises a one-piece moulding of an elastomeric plastics material.

An embodiment of this invention will now be described by way of example only and with reference to the accompanying drawings, in which:
FIGURE 1 is a perspective view of an embodiment of tie in accordance with this invention; and
FIGURE 2 is a perspective view of the tie of Figure 1 when in use.

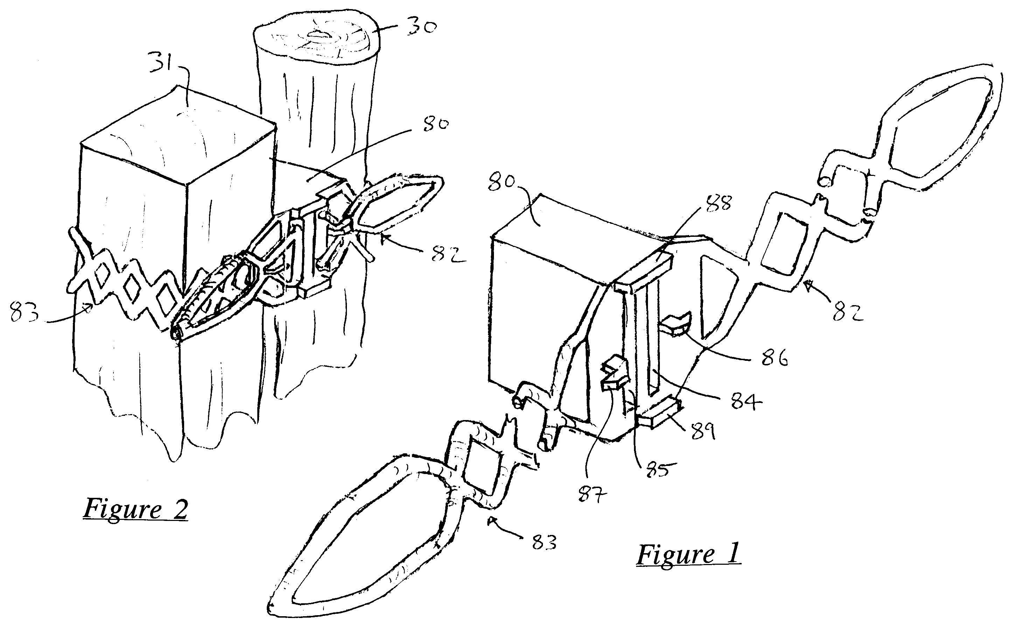

Referring to Figures 1 and 2 of the drawings, there is shown a one-piece tie which is moulded from an elastomeric plastics material. The tie comprises a box-shaped body portion 80 having two flat straps 82,83 extending from its opposite sides at one end thereof. The body 80 is formed with two rectangular-section through-passages 84,85 extending parallel to each other between the opposite ends of the body. Each strap 82,83 comprises a series of diamond-shape frame-like elements joined corner-to-corner along its length, to allow elastic extension or stretching of the strap, and an elongate, pointed element at its end. The body 80 is formed on its end from which the straps 82,83 extend with two hook-shaped catches 86,87. This end of the body 80 is also formed, beyond the ends of the exit openings of the through-passages 84,85, with projecting ribs 88,89, but these ribs may be omitted.

In use, the body 80 is positioned between the tree 30 and post 31 as shown in Figure 2, and the straps 82,83 are looped around the tree and post and passed through the respective passages 84,85 of the head 80: the two passages 84,85 may be replaced by a single passage able to accept the two straps. Each strap is tightened to appropriate tension, then folded back over its respective hook 86,87 to lock in position. It will be appreciated that strap 83 can be tightened to a relatively high tension for firm attachment to the post 31, whilst the strap 82 can be tightened to a lower tension appropriate for the tree 30. It will be noted that in the example shown, the two straps 82,83 are identical, so that either can be looped around the tree and will allow the tree to grow (each strap being able to stretch relatively easily): however, the straps 82,83 need not be identical.

## Claims

1. A tie comprising one or more elongate straps (82, 83) formable into first and second side-by-side loops, and fastening means arranged for locking the loops, the arrangement enabling said second loop to be tightened to a tension independent of the tension to which the first loop is tightened, characterised in that said fastening means (86,87) is arranged for locking the loops independently of each other, the arrangement further enabling the first loop to be tightened to a tension independent of the tension to which the second loop is tightened.

2. A tie as claimed in claim 1, characterised in that the strap or straps (82, 83) extend from a body portion (80), the body portion (80) being arranged for positioning between two members (30,31) about which, in use, the two loops are formed.

3. A tie as claimed in claim 2, characterised in that first and second said straps (82, 83) are provided which both extend from a first end of said body portion (80) and which are both formed with a series of perforations along their lengths, said body portion (80) being formed with a through-passage, or a pair of through-passages (84, 85), between its said first end and its opposite end, and being arranged so that each strap (82, 83) can be formed into said first or second loops respectively and then passed through said passage, or a respective said passage (84, 85), from said opposite end to said first end, said fastening means comprising a pair of projections (86, 87) on said body portion (80), arranged to engage with selective perforations of said first and second strap (82, 83) respectively.

4. A tie as claimed in claim 3, characterised in that each said fastening means comprises a projection (86,87) in the form of a hook-shaped catch on said first end of the body portion (80).

5. A tie as claimed in any preceding claim, characterised in that the tie is a one-piece moulding of elastomeric plastics material.

## Patentansprüche

1. Band, das einen oder mehrere längliche Streifen (82, 83), die zu einer ersten und einer zweiten Schlaufe, die nebeneinander liegen, gebildet werden können, und ein Befestigungsmittel, das zur Verriegelung der Schlaufen ausgeführt ist, umfaßt, wobei die Ausführung ein Festziehen der zweiten Schlaufe auf eine Spannung ermöglicht, die von der Spannung, auf die die erste Schlaufe festgezogen ist, unabhängig ist, dadurch gekennzeichnet, daß das Befestigungsmittel (86, 87) zur voneinander unabhängigen Verriegelung der Schlaufen ausgeführt ist, wobei die Ausführung weiterhin ein Festziehen der ersten Schlaufe auf eine Spannung, die von der Spannung, auf die die zweite Schlaufe festgezogen ist, unabhängig ist, ermöglicht.

2. Band nach Anspruch 1, dadurch gekennzeichnet, daß sich der oder die Streifen (82, 83) von einem Körperteil (80) erstrecken, der zur Positionierung zwischen zwei Gliedern (30, 31), um die im Gebrauch die zwei Schlaufen gebildet werden, ausgeführt ist.

3. Band nach Anspruch 2, dadurch gekennzeichnet, daß ein erster und ein zweiter solcher Streifen (82, 83) vorgesehen sind, die sich beide von einem ersten Ende des Körperteils (80) erstrecken und die beide mit einer Reihe von Perforationen entlang ihrer Länge ausgebildet sind, wobei der Körperteil (80) zwischen seinem ersten Ende und seinem gegenüberliegenden Ende mit einem Durchgang oder einem Paar von Durchgängen (84, 85) ausgebildet ist und so ausgeführt ist, daß jeder Streifen (82, 83) zu der ersten bzw. zweiten Schlaufe gebildet werden und dann durch den Gang oder einen dazugehörigen Gang (84, 85) von dem gegenüberliegenden Ende zum ersten Ende hindurchgeführt werden kann, wobei das Befestigungsmittel ein Paar Vorsprünge (86, 87) an dem Körperteil (80) umfaßt, die zum Eingriff mit ausgewählten Perforationen des ersten bzw. des zweiten Streifens (82, 83) ausgeführt sind.

4. Band nach Anspruch 3, dadurch gekennzeichnet, daß jedes Befestigungsmittel einen Vorsprung (86, 87) in Form einer hakenförmigen Arretierung an dem ersten Ende des Körperteils (80) umfaßt.

5. Band nach einem der vorhergehenden Ansprüche, dadurch gekennzeichnet, daß es sich dabei um ein einstückiges Formteil aus einem elastomeren Kunststoff handelt.

## Revendications

1. Bande comprenant un ou plusieurs rubans allongés (82, 83) pouvant être formés en des première et deuxième boucles côte à côte, et un moyen d'attache prévu pour bloquer les boucles, l'arrangement permettant à ladite deuxième boucle d'être serrée à une tension indépendante de la tension à laquelle la première boucle est serrée, caractérisée en ce que ledit moyen d'attache (86, 87) est prévu pour bloquer les boucles indépendamment l'une de l'autre, l'arrangement permettant en outre de serrer la première boucle à une tension indépendante de la tension à laquelle la deuxième boucle est serrée.

2. Bande selon la revendication 1, caractérisée en ce que le ou les rubans (82, 83) s'étendent depuis une portion de corps (80), la portion de corps (80) étant prévue pour se positionner entre deux éléments (30, 31) autour desquels, lors de l'utilisation, les deux boucles sont formées.

3. Bande selon la revendication 2, caractérisée en ce que les premier et deuxième desdits rubans (82, 83) sont prévus pour s'étendre tous les deux depuis une première extrémité de ladite portion de corps (80) et sont tous les deux formés avec une série de perforations suivant leur longueur, ladite portion de corps (80) étant formée avec un passage traversant, ou une paire de passages traversants (84, 85), entre sa dite première extrémité et son extrémité opposée, et étant prévue de telle sorte que chaque ruban (82, 83) puisse être formé en lesdites première ou deuxième boucles respectivement puis passé à travers ledit passage, ou un dit passage respectif (84, 85), depuis ladite extrémité opposée jusqu'à ladite première extrémité, ledit moyen d'attache comprenant une paire de saillies (86, 87) sur ladite portion de corps (80), prévues pour s'engager avec des perforations sélectives desdits premier et deuxième rubans (82, 83) respectivement.

4. Bande selon la revendication 3, caractérisé en ce que chacun desdits moyens d'attache comprend une saillie (86, 87) en forme de crochet d'attache sur ladite première extrémité de la portion de corps (80).

5. Bande selon l'une quelconque des revendications précédentes, caractérisée en ce que la bande est un moulage d'une seule pièce en matériau plastique élastomère.
